# EUROPÄISCHE PATENTSCHRIFT

(11) **EP 0 964 195 B1**
(45) Veröffentlichungstag und Bekanntmachung des Hinweises auf die Patenterteilung: **31.07.2002**
(21) Anmeldenummer: 99109903.7
(22) Anmeldetag: 20.05.1999
(51) Int. Cl.: F16L 3/13, F16L 3/08, F16B 2/22, F16L 3/237

(54) **Befestigungsvorrichtung**
Fastening device
Dispositif de fixation

(30) Priorität: 10.06.1998 DE 19825782
(43) Veröffentlichungstag der Anmeldung: 15.12.1999
(73) Patentinhaber: KKP Rapid GmbH & Co KG, 97638 Mellrichstadt (DE)
(72) Erfinder: Hölzer, Eberhard A., 97332 Volkach (DE)
(74) Vertreter: Böck, Bernhard, Dipl.-Ing.

(56) Entgegenhaltungen:
- EP-A- 0 483 635
- EP-A- 0 779 439
- FR-A- 2 551 174
- US-A- 4 881 705
- US-A- 5 316 245

## Beschreibung

Die vorliegende Erfindung betrifft eine Befestigungsvorrichtung zur lösbaren Verbindung von Anbauteilen mit einem Träger aufweisend eine Halteclipanordnung aus einem hartelastischen Kunststoff mit einem Befestigungsteil zur Befestigung am Träger und einem, insbesondere elastischen, Verbindungsteil zur Herstellung der lösbaren Verbindung mit zumindest einem Anbauteil, wobei der Verbindungsteil eine Anbauteilaufnahme mit einem durch einen Federschenkel begrenzten Einführspalt aufweist und die Anbauteilaufnahme mit einer weichelastischen Auskleidung versehen ist. Des weiteren betrifft die vorliegende Erfindung ein Verfahren zur Herstellung einer derartigen Befestigungsvorrichtung.

Befestigungsvorrichtungen der eingangs genannten Art werden beispielsweise als Bremsleitungshalter zur lösbaren Befestigung von Bremsleitungen am Unterboden eines Kraftfahrzeuges verwendet. Zur Verbindung werden die Bremsleitungen auf den Einführspalt aufgesetzt und unter Aufweitung des Einführspaltes in die Anbauteilaufnahme hineingedrückt, in der sie aufgrund der Rückstellbewegung des Federschenkels sicher gehalten werden. Um die Übertragung von schädlichen Vibrationen vom Unterboden des Kraftfahrzeuges auf die Bremsleitungen weitestgehend zu unterbinden, hat es sich als vorteilhaft herausgestellt, die Anbauteilaufnahme mit einer weichelastischen Auskleidung zu versehen. Bei bekannten Befestigungsvorrichtungen wird diese weichelastische Auskleidung der ansonsten hartelastischen Halteclipanordnung durch Einspritzen eines entsprechenden Kunststofformteils auf die Innenwandung der Anbauteilaufnahme erzeugt. Hierdurch wird gleichzeitig eine verbindende Haftung zwischen der elastischen Auskleidung und der Anbauteilaufnahme hergestellt. Die Herstellung derartiger materialkombinierender Befestigungsvorrichtungen erfolgt in einem zweiphasigen Spritzgießverfahren, wobei in der ersten Phase des Verfahrens in einem Formwerkzeug die Halteclipanordnung aus hartelastischem Kunststoff hergestellt wird und in der zweiten Phase in einem zweiten Spritzvorgang unter Verwendung desselben Formwerkzeuges das Einspritzen des weichelastischen Materials auf die hartelastische Anbauteilaufnahme der Halteclipanordnung zur Herstellung der elastischen Auskleidung.

Aufgrund des vorbeschriebenen zweiphasigen Ablaufs des Spritzverfahrens ergeben sich relativ lange Spritzzyklen bei der Herstellung solcher materialkombinierender Befestigungsvorrichtungen und wegen des unmittelbaren Materialkontakts beim Spritzvorgang die Notwendigkeit der Auswahl entsprechend verträglicher Materialien. Hierdurch ist die Materialauswahl für die Auskleidung von vornherein bereits eingeschränkt. Darüber hinaus erfordert diese Herstellung der bekannten Befestigungsvorrichtung ein kompliziertes und damit wartungsintensives Formwerkzeug, welches zur Durchführung des zweiphasigen Spritzgießverfahrens eine Vielzahl von beweglichen Teilen aufweist und deshalb nur eine begrenzte Anzahl von Formnestern zuläßt. Auch resultiert aus dem vorbeschriebenen Herstellungsverfahren einer Befestigungsvorrichtung im Materialverbund zwischen der Halteclipanordnung und der Auskleidung ein großer Aufwand, wenn diese in einem späteren Recyclingverfahren getrennt werden sollen.

Ein solches einteiliges Halteelement aus Kunststoff, welches aus zwei verschiedenen, miteinander verbundenen Materialien in einem Zweikomponentenspritzverfahren hergestellt wird, ist beispielsweise in der EP 0 779 439 A1 beschrieben.

In der US 4 881 705 ist ebenfalls ein einstückiges Halteelement aus Kunststoff beschrieben, welches aus zumindest zwei unterschiedlich weichen Materialien gefertigt ist, wobei das Halteelement mittels eines zweiphasigen Spritzgießverfahrens gefertigt wird und die beiden Materialien fest miteinander verbunden sind.

In der EP 0 483 635 A1 ist ein zweiteiliges Halteelement aus Kunststoff zur Halterung rohrförmiger Teile beschrieben. Das Halteelement besteht aus einer Außenschale aus hartem Material und einer darin eingesetzten Innenschale aus weichem Material. Im Bereich der Lagerstelle des aufzunehmenden rohrförmigen Teils ist eine durchgehende Freiarbeitung zwischen Innenschale und Außenschale vorgesehen. Die zum Halten des rohrförmigen Teils erforderliche Haltekraft wird vollständig von der Innenschale aufgebracht.

Der vorliegenden Erfindung liegt daher die Aufgabe zugrunde, eine Befestigungsvorrichtung sowie ein Verfahren zu deren Herstellung vorzuschlagen, die bzw. das eine weniger zeitaufwendige und damit kostengünstigere Herstellung pro Einheit ermöglicht sowie eine einfachere Trennung der verwendeten Materialien in einem späteren Recyclingverfahren ermöglicht.

Diese Aufgabe wird durch eine Befestigungsvorrichtung mit den Merkmalen des Anspruchs 1 bzw. durch ein Verfahren zur Herstellung einer Befestigungsvorrichtung mit den Merkmalen des Anspruchs 6 gelöst.

Bei der erfindungsgemäßen Befestigungsvorrichtung ist die Auskleidung der Anbauteilaufnahme als unabhängiges Einsetzteil ausgebildet. Hierdurch ist es möglich, die aus hartelastischem Kunststoff gefertigte Halteclipanordnung und das aus weichelastischem Kunststoff gefertigte Einsetzteil voneinander unabhängig in separaten Spritzgießwerkzeugen mit einer großen Formnestzahl herzustellen. Hierdurch wird der jeweilige Spritzzyklus erheblich verkürzt und der Teileausstoß pro Zyklus nur noch durch die Wahl der Spritzgießmaschine begrenzt. Daher sind in einem definierten Zeitraum von der erfindungsgemäßen Befestigungsvorrichtung wesentlich höhere Stückzahlen herstellbar als von der bekannten, in einem zweiphasigen Spritzgießverfahren hergestellten Befestigungsvorrichtung. Darüber hinaus ergibt sich aufgrund der voneinander unabhängig erfolgenden Herstellung der Halteclipanordnung und des Einsetzteils nicht der durch das zweiphasige Spritzgießverfahren bediente adhäsive Verbund zwischen den unterschiedlichen Materialien, was eine leichtere Trennbarkeit der Auskleidung von der Halteclipanordnung beim späteren Recycling zur Folge hat.

Bei einer bevorzugten Ausführungsform der Befestigungsvorrichtung weist das Einsetzteil im wesentlichen die Form eines längsgeschlitzten Hohlzylinders mit den Einführspalt definierenden Schlitzrändern auf, wobei die Schlitzränder eine Mantelfläche des Hohlzylinders überragende Positionierungsvorsprünge zum Eingriff in Positionierungsrücksprünge aufweisen, die an den Begrenzungsrändern des Einführspaltes der Anbauteilaufnahme ausgebildet sind.

Aufgrund der vorbeschriebenen ineinandergreifenden Ausbildung des Einsetzteils und der Anbauteilaufnahme der Halteclipanordnung ist die Relativposition zwischen dem Einführspalt der Anbauteilaufnahme und dem Einführspalt des Einsetzteils eindeutig definiert, so daß trotz der aus zwei voneinander unabhängigen Einzelteilen gebildeten Befestigungsvorrichtung in jedem Fall die Ausbildung eines Einführspaltes zum bestimmungsgemäßen Einführen des jeweiligen Anbauteils in die Befestigungsvorrichtung sichergestellt ist.

Darüber hinaus erweist es sich als vorteilhaft, wenn das Einsetzteil formstabil ausgebildet ist, um einen Fügevorgang zum Einsetzen des Einsetzteils in die Anbauteilaufnahme des Halteclips zu ermöglichen, ohne daß eine Verformung, beispielsweise eine Verwindung des Einsetzteils, den Fügevorgang erschwert.

Als vorteilhaft erweist sich auch, wenn das Einsatzteil auf seiner Mantelfläche mit einer Rasteinrichtung zur Herstellung einer Rastverbindung mit einer in einer Wandung der Anbauteilaufnahme ausgebildeten Rasteinrichtung versehen ist. Aufgrund dieser Rastverbindung ist es möglich, eine verrastende Positionierung für einen Fügevorgang zu definieren, der eine sichere Positionierung des Einsetzteils in der Anbauteilaufnahme der Halteclipanordnung bei möglichst geringen Fügekräften ermöglicht. Hierdurch ist auch sichergestellt, daß die äußere Form des Einsetzteiles durch die bei einem Fügevorgang aufgebrachten Fügekräfte weitestgehend unbeeinflußt bleibt.

Als besonders vorteilhaft erweist es sich in diesem Zusammenhang, wenn die Rasteinrichtung am Einsetzteil als Rastvorsprung und die Rasteinrichtung an der Anbauteilaufnahme als Rastöffnung ausgebildet ist, da somit die Herstellung einer Rastverbindung ohne Beeinträchtigung der dem Anbauteil zugewandten Oberfläche des Einsetzteils möglich ist.

Bei dem erfindungsgemäßen Verfahren zur Herstellung einer erfindungsgemäßen Befestigungsvorrichtung werden die Halteclipanordnung und das Einsetzteil zunächst unabhängig voneinander hergestellt, und anschließend erfolgt durch einen Montagevorgang die Kombination der Halteclipanordnung mit dem Einsetzteil zur Ausbildung der Befestigungsvorrichtung.

Eine besonders einfache Art der Montage wird möglich, wenn die Halteclipanordnung und das Einsetzteil in einem Fügevorgang miteinander kombiniert werden, da hierzu weder besondere Verbindungsmittel noch besondere Werkzeuge notwendig sind und darüber hinaus durch einfaches Entfügen der Teile eine leichte Trennbarkeit der aus unterschiedlichen Materialien gebildeten Teile gegeben ist als wesentliche Voraussetzung für ein auch unter wirtschaftlichen Gesichtspunkten erfolgreiches Recycling.

Nachfolgend wird eine bevorzugte Ausführungsform der Befestigungsvorrichtung sowie ein Verfahren zur Herstellung einer derartigen Befestigungsvorrichtung anhand der Zeichnungen näher erläutert. Es zeigen:
**Fig. 1** eine Befestigungsvorrichtung mit einer Halteclipanordnung und zwei in die Halteclipanordnung eingesetzten Einsetzteilen;
**Fig. 2** die in **Fig. 1** dargestellte Halteclipanordnung der Befestigungsvorrichtung in Seitenansicht;
**Fig. 3** die in **Fig. 2** dargestellte Halteclipanordnung in einer Unteransicht;
**Fig. 4** einen Fügevorgang als Teil des Herstellungsverfahrens zur Herstellung der in **Fig. 1** dargestellten Befestigungsvorrichtung.

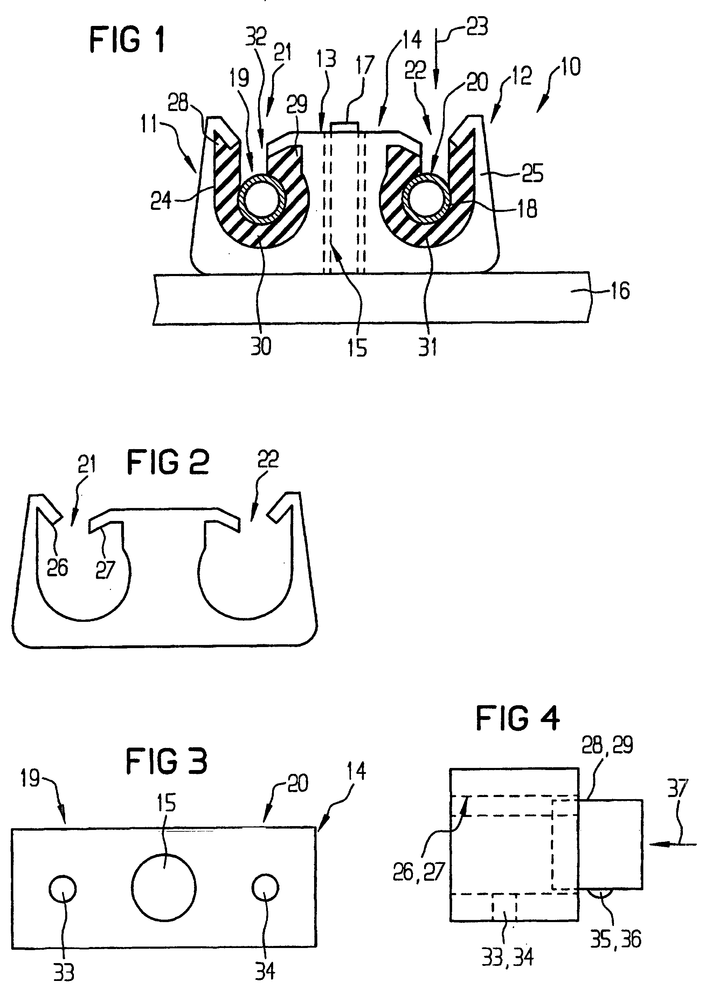

**Fig. 1** zeigt eine Befestigungsvorrichtung 10 mit zwei Halteclips 11, 12, die über einen Befestigungsteil 13 zur Ausbildung einer Halteclipanordnung 14 miteinander verbunden sind. Der Befestigungsteil 13 weist eine zwischen den Halteclips 11, 12 verlaufende Befestigungsbohrung 15 auf, die im dargestellten Beispielsfall zur Aufnahme eines am Unterboden 16 eines Kraftfahrzeuges angeordneten Befestigungsmittels 17 dient.

Wie **Fig. 1** ferner zeigt, dienen die Halteclips 11, 12 zur lösbaren Aufnahme von im vorliegenden Fall als Bremsleitungen 18 ausgebildeten Anbauteilen in einer Anbauteilaufnahme 19, 20, die bis auf einen Einführspalt 21, 22 das jeweilige Anbauteil 19 vollständig umgibt. Um ein elastisches Aufweiten der Einführspalte 21, 22 bei einem Eindrücken der Anbauteile 18 von oben, wie in **Fig. 1** durch den Pfeil 23 angedeutet, zu ermöglichen, ist der Einführspalt 21, 22 auf einer Seite durch jeweils einen Federschenkel 24, 25 begrenzt.

Die Anbauteilaufnahmen 19, 20 sind jeweils mit einer als Einsetzteil 30, 31 ausgebildeten weichelastischen Auskleidung versehen, die eine vibrationsdämpfende Aufnahme der Anbauteile 18 in den Anbauteilaufnahmen 19, 20 der aus einem hartelastischen Material gebildeten Halteclipanordnung ermöglichen.

Wie insbesondere aus **Fig. 2** hervorgeht, sind beidseitig der Einführspalte 21, 22 der Anbauteilaufnahmen 19, 20 Positionierungsrücksprünge 26 und 27 ausgebildet. In diese Positionierungsrücksprünge 26, 27 greifen korrespondierend ausgebildete Positionierungsvorsprünge 28, 29 (**Fig. 1**) der Einsetzteile 30, 31 ein. Die Positionierungsvorsprünge 28, 29 definieren dabei gleichzeitig Schlitzränder der hier insgesamt als längsgeschlitzte Hohlzylinder ausgeführten Einsetzteile 30, 31. Hierdurch ist sichergestellt, daß ein zwischen den Schlitzrändern ausgebildeter Einführspalt 32 der Einsetzteile 30, 31 in einer Überdeckungslage mit dem Einführspalt 21 bzw. 22 der Anbauteilaufnahmen 19, 20 angeordnet ist und auch in dieser Position verbleibt.

Wie aus einer Zusammenschau der in der **Fig. 3** dargestellten Unteransicht der Halteclipanordnung 14 und der **Fig. 1** ersichtlich, ist die Wandung der Anbauteilaufnahmen 19, 20 in einem dem Einführspalt 21 bzw. 22 gegenüberliegenden Bereich mit jeweils einer Rastöffnung 33, 34 versehen, die, wie aus **Fig. 4** ersichtlich, zur Aufnahme eines zugeordneten Rastvorsprungs 35 bzw. 36 auf der Mantelfläche des Einsetzteils 30, 31 dient.

Die Vorgehensweise bei der Montage bzw. dem Fügen der voneinander unabhängig hergestellten Einzelteile der Befestigungsvorrichtung 10, also im vorliegenden Fall der Halteclipanordnung 14 und der beiden Einsetzteile 30, 31, wird bei einer Zusammenschau der **Fig. 1** und **4** deutlich. Zunächst werden die Einsetzteile 30, 31 mit ihren der Halteclipanordnung 14 gegenüberliegenden Endbereichen der Positionierungsvorsprünge 28, 29 in die zugeordneten Positionierungsrücksprünge 26, 27 des jeweiligen Halteclips 11, 12 der Halteclipanordnung 14 eingesetzt. Anschließend werden durch Erhöhung der durch den Pfeil 37 dargestellten Fügekraft die Einsetzteile 30, 31 im Bereich ihrer Rastvorsprünge 35, 36 elastisch verformt und gleichzeitig in die Anbauteilaufnahmen 19, 20 der Halteclips 11, 12 vorbewegt, bis bei Erreichen der Rastöffnungen 33, 34 die Rastvorsprünge 35, 36 in die Rastöffnungen 33, 34 einrasten.

Ebenso leicht wie der vorbeschriebene Fügevorgang zur Montage der Befestigungsvorrichtung 10 lassen sich durch Aufbringung einer in ihrer Richtung der Fügekraft 37 entsprechenden Trennkraft die Einsetzteile 30, 31 aus dem Fügeverbund mit der Halteclipanordnung 14 trennen. Hierdurch können nachfolgend die zur Herstellung der Halteclipanordnung 14 bzw. zur Herstellung der Einsetzteile 30 verwendeten unterschiedlichen Materialien sortenrein vereinzelt werden, wodurch ein Recycling der verwendeten Materialien mit geringstmöglichem Separierungsaufwand ermöglicht wird.

## Patentansprüche

1. Befestigungsvorrichtung (10) zur lösbaren Verbindung von Anbauteilen (18) mit einem Träger (16) aufweisend eine Halteclipanordnung (14) aus einem hartelastischem Kunststoff mit einem Befestigungsteil (13) zur Befestigung am Träger und einem elastischen Verbindungsteil zur Herstellung der lösbaren Verbindung mit zumindest einem Anbauteil, wobei das Verbindungsteil eine Anbauteilaufnahme (19, 20) mit einem durch einen Federschenkel (24, 25) begrenzten Einführspalt (21, 22) aufweist, und die Anbauteilaufnahme mit einer weichelastischen Auskleidung versehen ist,
**dadurch gekennzeichnet,**
**daß** die Auskleidung der Anbauteilaufnahme (19, 20) als von der Halteclipanordnung unabhängiges Einsetzteil (30, 31) ausgebildet ist.

2. Befestigungsvorrichtung nach Anspruch 1,
**dadurch gekennzeichnet,**
**daß** das Einsetzteil (30, 31) im wesentlichen die Form eines längsgeschlitzten Hohlzylinders mit den Einführspalt (32) definierenden Schlitzrändern aufweist, wobei die Schlitzränder die Mantelfläche des Hohlzylinders überragende Positionierungsvorsprünge (28, 29) zum Eingriff in Positionierungsrücksprünge (26, 27) aufweisen, die an Begrenzungsrändern des Einführspaltes (21, 22) der Anbauteilaufnahme (19, 20) ausgebildet sind

3. Befestigungsvorrichtung nach Anspruch 1 oder 2,
**dadurch gekennzeichnet,**
**daß** das Einsetzteil (30, 31) formstabil ausgebildet ist.

4. Befestigungsvorrichtung nach einem oder mehreren der vorangehenden Ansprüche,
**dadurch gekennzeichnet,**
**daß** das Einsetzteil (30, 31) auf seiner Mantelfläche mit einer Rasteinrichtung (35, 36) zur Herstellung einer Rastverbindung mit einer in einer Wandung der Anbauteilaufnahme (19, 20) ausgebildeten Rasteinrichtung (33, 34) versehen ist.

5. Befestigungsvorrichtung nach Anspruch 4,
**dadurch gekennzeichnet,**
**daß** die Rasteinrichtung (35, 36) am Einsetzteil (30, 31) als Rastvorsprung und die Rasteinrichtung (33, 34) an der Anbauteilaufnahme (19, 20) als Rastöffnung ausgebildet ist.

6. Verfahren zur Herstellung einer Befestigungsvorrichtung nach einem oder mehreren der Ansprüche 1 bis 5,
**dadurch gekennzeichnet,**
**daß** die Halteclipanordnung (14) und das Einsetzteil (30, 31) unabhängig voneinander hergestellt werden, und anschließend die Befestigungsvorrichtung (10) durch eine in einem Montagevorgang hergestellte Kombination der Halteclipanordnung und des Einsetzteils (30, 31) erfolgt.

7. Verfahren nach Anspruch 6,
**dadurch gekennzeichnet,**
**daß** der Montagevorgang als Fügevorgang erfolgt.

## Claims

1. Fastening device (10) for releasably connecting add-on parts (18) to a carrier (16), comprising a retaining clip arrangement (14) made of an energy-elastic plastics material with a fastening part (13) for fastening to the carrier and with an elastic connection part for establishing the releasable connection to at least one add-on part, wherein the connection part comprises an add-on part receiver (19, 20) having an insertion gap (21, 22) delimited by a spring leg (24, 25), and the add-on part receiver is provided with a flexible lining,
**characterized in**
**that** the lining of the add-on part receiver (19, 20) takes the form of an insertion part (30, 31), which is independent of the retaining clip arrangement.

2. Fastening device according to claim 1,
**characterized in**
**that** the insertion part (30, 31) substantially takes the form of a longitudinally slotted hollow cylinder with slot edges defining the insertion gap (32), wherein the slot edges comprise positioning projections (28, 29), which project beyond the lateral surface of the hollow cylinder, for engagement into positioning recesses (26, 27) formed at boundary edges of the insertion gap (21, 22) of the add-on part receiver (19, 20).

3. Fastening device according to claim 1 or 2,
**characterized in**
**that** the insertion part (30, 31) is of a dimensionally stable design.

4. Fastening device according to one or more of the preceding claims,
**characterized in**
**that** the insertion part (30, 31) is provided at its lateral surface with a detent device (35, 36) for establishing a detent connection with a detent device (33, 34) formed in a wall of the add-on part receiver (19, 20).

5. Fastening device according to claim 4,
**characterized in**
**that** the detent device (35, 36) on the insertion part (30, 31) takes the form of a detent projection and the detent device (33, 34) on the add-on part receiver (19, 20) takes the form of a detent opening.

6. Method of manufacturing a fastening device according to one or more of claims 1 to 5,
**characterized in**
**that** the retaining clip arrangement (14) and the insertion part (30, 31) are manufactured independently of one another, and then the fastening device (10) is effected by means of a combination of the retaining clip arrangement and the insertion part (30, 31) produced in an assembly operation.

7. Method according to claim 6,
**characterized in**
**that** the assembly operation is effected as a jointing operation.

## Revendications

1. Dispositif de fixation (10) pour la liaison démontable de pièces à monter (18) sur un support (16), présentant un dispositif de maintien par enclenchement élastique (14) en matière plastique élastique dure, comportant une pièce de fixation (13) pour la fixation sur le support, et une pièce de liaison élastique pour réaliser la liaison démontable avec au moins une pièce à monter, la pièce de liaison présentant un réceptacle de pièce à monter (19, 20) comportant une fente d'introduction (21, 22) délimitée par une branche formant ressort (24, 25), et le réceptacle de pièce à monter étant prévu avec une garniture élastique moue,
**caractérisé en ce que**
la garniture du réceptacle de pièce à monter (19, 20) est réalisée sous la forme d'une pièce d'insertion (30, 31) indépendante du dispositif de maintien par enclenchement élastique (14).

2. Dispositif de fixation suivant la revendication 1,
**caractérisé en ce que**
la pièce d'insertion (30, 31) présente essentiellement la forme d'un cylindre creux fendu longitudinalement, comportant des bords de fente définissant la fente d'introduction (32), les bords de la fente présentant des saillies de positionnement (28, 29) dépassant de la surface enveloppe du cylindre creux pour faire prise dans des ergots de positionnement en contre-dépouille (26, 27) qui sont réalisés sur les bords délimitant la fente d'introduction (21, 22) du réceptacle de pièce à monter (19, 20).

3. Dispositif de fixation suivant l'une des revendications 1 ou 2,
**caractérisé en ce que**
la pièce d'insertion (30, 31) est réalisée indéformable.

4. Dispositif de fixation suivant l'une ou plusieurs des revendications précédentes,
**caractérisé en ce que**
la pièce d'insertion (30, 31) est prévue sur sa surface enveloppe avec un dispositif d'encliquetage (35, 36) pour réaliser une liaison par encliquetage avec un dispositif d'encliquetage (33, 34) réalisé dans une paroi du réceptacle de pièce à monter (19, 20).

5. Dispositif de fixation suivant la revendication 4,
**caractérisé en ce que**
le dispositif d'encliquetage (35, 36) sur la pièce d'insertion (30, 31) est réalisé sous la forme d'une saillie d'encliquetage et **en ce que** le dispositif d'encliquetage (33, 34) sur le réceptacle de pièce à monter (19, 20) est réalisé sous la forme d'une ouverture d'encliquetage.

6. Procédé de fabrication d'un dispositif de fixation suivant l'une ou plusieurs des revendications 1 à 5,
**caractérisé en ce que**
le dispositif de maintien par enclenchement élastique (14) et la pièce d'insertion (30, 31) sont réalisés indépendants l'un de l'autre et qu'ensuite le dispositif de fixation (10) est constitué par une combinaison, réalisée au cours d'une opération de montage, du dispositif de maintien par enclenchement élastique et de la pièce d'insertion (30, 31).

7. Procédé suivant la revendication 6,
**caractérisé en ce que**
l'opération de montage se fait par une opération d'assemblage par coulissement.
